# EUROPEAN PATENT APPLICATION

(11) **EP 4 381 974 A1**
(43) Date of publication of application: **12.06.2024**
(21) Application number: 22852264.5
(22) Date of filing: 03.08.2022
(51) Int. Cl.: A24F 40/46, A24F 40/40

(54) **AEROSOL GENERATION DEVICE**

(30) Priority: 03.08.2021 CN 202110886889; 03.08.2021 CN 202110888333
(71) Applicant: Shenzhen First Union Technology Co., Ltd., Shenzhen, Guangdong 518000 (CN)
(72) Inventor: ZHANG, Shuyuan, Shenzhen, Guangdong 518000 (CN); WU, Jian, Shenzhen, Guangdong 518000 (CN); QI, Zuqiang, Shenzhen, Guangdong 518000 (CN); LEI, Baoling, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2022/110083
(87) International publication number: WO 2023/011552

(57) **Abstract**

This application provides an aerosol generation device and a susceptor for an aerosol generation device. The aerosol generation device includes: a cavity, configured to receive an aerosol generation product; a susceptor, at least partially extending in the cavity, and configured to be penetrated by a changing magnetic field to produce heat, to heat the aerosol generation product; and an induction coil, arranged in the susceptor, and generate the changing magnetic field. In the above aerosol generation device, the induction coil is accommodated and encapsulated in the susceptor, which is conducive to miniaturization of the device.

## Description

### CROSS-REFERENCE TO RELATED APPLICATIONS

This application claims priority to Chinese Patent Application No. 202110886889.8, entitled "AEROSOL GENERATION DEVICE AND HEATER FOR AEROSOL GENERATION DEVICE" and filed with the China National Intellectual Property Administration on August 3, 2021, and priority to Chinese Patent Application No. 202110888333.2, entitled "AEROSOL GENERATION DEVICE AND HEATER FOR AEROSOL GENERATION DEVICE" and filed with the China National Intellectual Property Administration on August 3, 2021, which are incorporated herein by reference in their entireties.

### TECHNICAL FIELD

Embodiments of this application relate to the field of aerosol generation technologies, and in particular, to an aerosol generation device and a heater for an aerosol generation device.

### BACKGROUND

Tobacco products (such as cigarettes and cigars) burn tobacco during use to produce tobacco smoke. Attempts are made to replace these tobacco-burning products by making products that release compounds without burning.

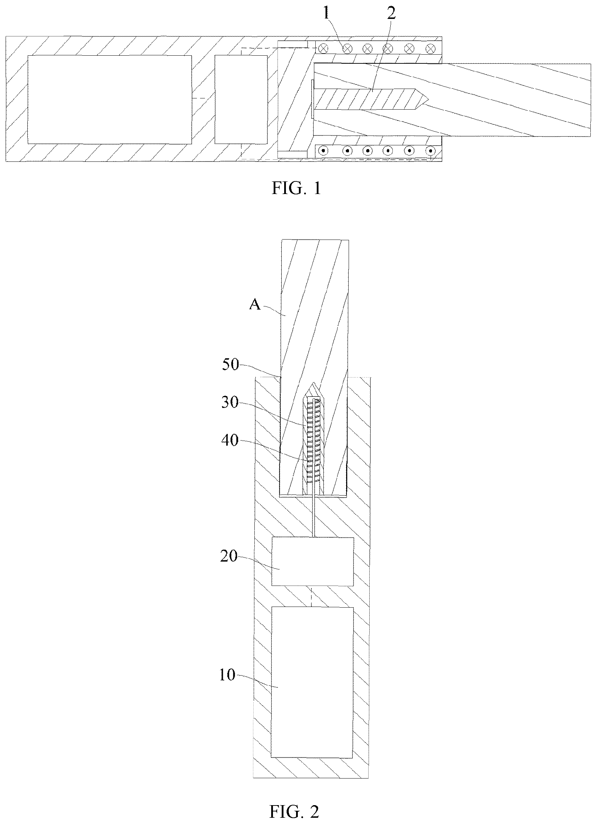

An example of such products is a heating device, as shown in FIG. 1, which generates a magnetic field through an induction coil 1, and performs induction heating through a susceptor 2 arranged in the coil, thereby heating tobacco products. The induction coil occupies a large space in such heating device, which is not conducive to miniaturization of the heating device.

### SUMMARY

An embodiment of this application provides an aerosol generation device, configured to heat an aerosol generation product to generate an aerosol, and including: a cavity, configured to receive an aerosol generation product; a susceptor, at least partially extending in the cavity, and configured to be penetrated by a changing magnetic field to produce heat, to heat the aerosol generation product in the cavity; and an induction coil, arranged in the susceptor, and configured to generate the changing magnetic field.

In a preferable embodiment, the induction coil and the susceptor are thermally conductive to each other; and the induction coil is made of a material with a positive or negative temperature coefficient of resistance, to determine a temperature of the susceptor during use by detecting a resistance of the induction coil.

In a preferable embodiment, the susceptor is constructed into a shape of a pin or a needle, and has a hollow extending in an axial direction; and the induction coil is located in the hollow.

In a preferable embodiment, a cross section of a wire material of the induction coil is constructed into that a size extending in an axial direction is greater than a size extending in a radial direction.

In a preferable embodiment, the induction coil includes a first portion and a second portion arranged in an axial direction, where in the axial direction of the induction coil, the number of windings or turns of each unit length in the first portion is less than the number of windings or turns of each unit length in the second portion.

In a preferable embodiment, the susceptor is constructed into a sheet, and includes a first surface and a second surface facing away from each other; and the induction coil is constructed into a planar helical coil located between the first surface and the second surface.

In a preferable embodiment, the susceptor includes a first sheet portion and a second sheet portion opposite to each other in a thickness direction; and the induction coil is located between the first sheet portion and the second sheet portion.

In a preferable embodiment, the first sheet portion and the second sheet portion are formed by folding a sheet precursor in half around an axis.

In a preferable embodiment, the device further includes: a magnetic core, at least partially located in the induction coil.

In a preferable embodiment, the magnetic core includes at least any one of iron, cobalt, or nickel.

In a preferable embodiment, at least a part of the magnetic core is in contact with the susceptor.

In a preferable embodiment, the susceptor includes: a substrate at least partially extending in a receiving cavity, and an inductive coating formed on the substrate.

In a preferable embodiment, the induction coil includes a first end and a second end opposite to each other in an axial direction; and the magnetic core runs through from the first end of the induction coil to the second end.

Another embodiment of this application provides an aerosol generation device, configured to heat an aerosol generation product to generate an aerosol, including: a receiving cavity, configured to receive the aerosol generation product; and a heater, at least partially extending in the receiving cavity, to heat the aerosol generation product, where the heater includes: a housing, constructed into at least partially extending in an axial direction of the receiving cavity, and having a retaining cavity extending in the axial direction; an induction coil, located in the retaining cavity of the housing, and configured to generate a changing magnetic field; and an inductor, at least partially located in the induction coil, and configured to be penetrated by the changing magnetic field to produce heat, where the housing is configured to heat the aerosol generation product by receiving the heat of the inductor.

Another embodiment of this application provides a heater for an aerosol generation device. The heater includes: a housing, having a retaining cavity extending in an axial direction; an induction coil, located in the retaining cavity of the housing, and configured to generate a changing magnetic field; and an inductor, at least partially located in the induction coil, and configured to be penetrated by the changing magnetic field to produce heat, where the housing is configured to heat the aerosol generation product by receiving the heat of the inductor.

In the above aerosol generation device, the induction coil is accommodated and encapsulated in the susceptor, which is conducive to miniaturization of the device.

### BRIEF DESCRIPTION OF THE DRAWINGS

The objective implementation, functional features, and advantages of this application are further illustrated with reference to the accompanying drawings by using the embodiments. One or more embodiments are exemplarily described with reference to the corresponding figures in the accompanying drawings, and the example descriptions do not constitute a limitation to the embodiments. Components in the accompanying drawings that have same reference numerals are represented as similar components, and unless otherwise particularly stated, the figures in the accompanying drawings are not drawn to scale.
FIG. 1 is a schematic structural view of an existing heating device;
FIG. 2 is a schematic structural view of an aerosol generation device according to an embodiment of this application;
FIG. 3 is a schematic structural view of a susceptor in FIG. 2;
FIG. 4 is a schematic structural view of an induction coil in FIG. 3;
FIG. 5 is a schematic structural view of a susceptor according to another embodiment;
FIG. 6 is a schematic cross-sectional view of an induction coil in FIG. 5 from an angle of view;
FIG. 7 is a schematic structural view of an induction coil according to another embodiment;
FIG. 8 is a schematic structural view of a susceptor according to another embodiment;
FIG. 9 is a schematic view of forming a susceptor precursor by etching on a sheet substrate in a susceptor preparation process according to an embodiment;
FIG. 10 is a schematic structural view of forming an induction coil on the susceptor precursor in FIG. 9;
FIG. 11 is a schematic view of folding the susceptor precursor in FIG. 10 in half to form a susceptor;
FIG. 12 is a schematic structural view of an aerosol generation device according to another embodiment;
FIG. 13 is a schematic structural view of an aerosol generation device according to an embodiment of this application;
FIG. 14 is a schematic exploded view of parts of a heater in FIG. 13 before assembly;
FIG. 15 is a schematic cross-sectional view of the heater in FIG. 14 from an angle of view;

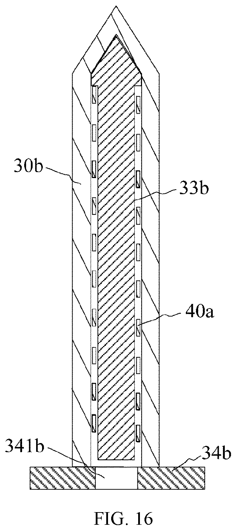

FIG. 16 is a schematic structural view of a heater according to another embodiment; and
FIG. 17 is a schematic exploded view of parts of the heater in FIG. 16 before assembly.

### DETAILED DESCRIPTION

To make the foregoing objects, features, and advantages of the present invention more comprehensible, detailed description is made to specific implementations of the present invention below with reference to the accompanying drawings. In the following description, many specific details are described for thorough understanding of the present invention. However, the present invention may be implemented in many other manners different from those described herein. A person skilled in the art may make similar improvements without departing from the connotation of the present invention. Therefore, the present invention is not limited to the specific embodiments disclosed below.

In the description of the present invention, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present invention and simplifying the description, rather than indicating or implying that the apparatus or element should have a particular orientation or be constructed and operated in a particular orientation, and therefore, should not be construed as a limitation on the present invention.

In addition, the terms "first" and "second" are used merely for the purpose of description, and shall not be construed as indicating or implying relative importance or implying a quantity of indicated technical features. Therefore, features defining "first" and "second" can explicitly or implicitly include at least one of the features. In the descriptions of the present invention, unless otherwise specified, "a plurality of" means two or more than two.

In the present invention, unless explicitly specified or limited otherwise, the terms "mounted", "connected", "connection", and "fixed" should be understood broadly, for example, which may be fixed connections, detachable connections, or integral connections; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art can understand specific meanings of the foregoing terms in the present invention according to a specific situation.

In the present invention, unless explicitly specified or limited otherwise, a first characteristic "on" or "under" a second characteristic may be the first characteristic in direct contact with the second characteristic, or the first characteristic in indirect contact with the second characteristic by using an intermediate medium. Moreover, the first feature "over", "above", and "on" the second feature may be that the first feature is directly above or obliquely above the second feature, or simply indicates that a horizontal height of the first feature is higher than that of the second feature. The first feature "under", "below", and "underneath" the second feature may be that the first feature is directly below or obliquely below the second feature, or simply indicates that a horizontal height of the first feature is less than that of the second feature.

It should be noted that when a component is referred to as "being fixed to" or "being arranged on" another component, the component may be directly on the other component, or there may be an intermediate component. When a component is considered to be "connected to" another component, the component may be directly connected to the another component, or there may be an intermediate component. The terms "vertical", "horizontal", "upper", "down", "left", "right", and similar expressions used in this specification are only for purposes of illustration but not indicate a unique implementation.

### Implementation 1

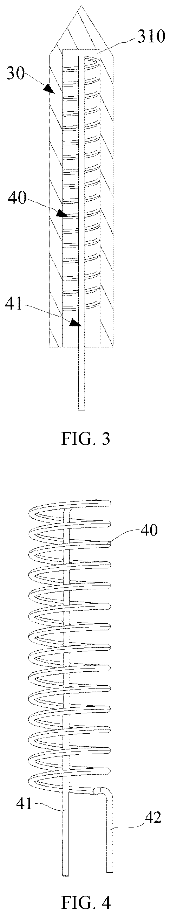

An embodiment of this application provides an aerosol generation device. The construction of the device, referring to FIG. 2 and FIG. 3, may include:
a cavity, provided with an opening 50, where an aerosol generation product A is removably received in the cavity through the opening 50;
a susceptor 30, at least partially extending in the cavity, and penetrated by a changing magnetic field to produce heat, to heat the aerosol generation product A, for example, a cigarette, so that at least one component of the aerosol generation product A evaporates and forms an aerosol for inhalation;
a magnetic field generator, for example, an induction coil 40, configured to generate the changing magnetic field under an alternating current;
a battery cell 10, being a rechargeable direct current cell, and capable of outputting a direct current; and
a circuit 20, connected to the rechargeable battery cell 10 through proper electricity, and configured to convert the direct current output by the battery cell 10 into an alternating current with a proper frequency and supply the alternating current to the induction coil 40.

In a more preferable embodiment, the frequency of the alternating current supplied by the circuit 20 to the induction coil 40 ranges from 80 KHz to 400 KHz; and more specifically, the frequency may approximately range from 200 KHz to 300 KHz.

In a preferable embodiment, a direct-current voltage provided by the battery cell 10 ranges from about 2.5 V to about 9.0 V, and the direct current provided by the battery cell 10 ranges from about 2.5 A to about 20 A.

In a preferable embodiment, the susceptor 30 is substantially in a shape of a pin or a needle, which is conducive to inserting the susceptor 30 into the aerosol generation product A. In addition, the susceptor 30 may have a length approximately ranging from 12 mm to 19 mm and a diameter ranging from 2.0 mm to 2.6 mm. The susceptor 30 may be made of stainless steel of level 430 (SS430), or may be made of stainless steel of level 420 (SS420) and an alloy material containing iron and nickel (such as permalloy).

Further, in an optional embodiment, the aerosol generation product A is preferably made of a tobacco-containing material that releases volatile compounds from the substrate when being heated, or may be a non-tobacco material that is suitable for being electrically heated for atomization. The aerosol generation product A is preferably a solid substrate, and may include one or more of powders, granules, shreds, strips, or flakes of one or more of vanilla leaves, tobacco leaves, homogenized tobacco, and expanded tobacco; or the solid substrate may include additional tobacco or non-tobacco volatile aroma compounds to be released when the substrate is heated.

Further, referring to FIG. 2 and FIG. 3, the susceptor 30 has a retaining cavity 310 inside and is in a shape of a pin or a needle. In addition, a front end of the susceptor 30 close to the opening 50 is a free end, and is usually constructed into a conical tip for easily inserting the susceptor 30 into the aerosol generation product A, and a tail end is constructed by an exposure formed by the retaining cavity 310 for easily assembling the induction coil 40 inside the susceptor 30.

The induction coil 40 is configured to generate a magnetic field under an alternating current, and specifically, is a helical shape extending in an axial direction of the susceptor 30 in structure.

In the embodiment shown in FIG. 3, the induction coil 40 is completely assembled and retained in the retaining cavity 310 of the susceptor 30, and after assembly, the induction coil 40 and the susceptor 30 are thermally conductive to each other. Certainly, the induction coil 40 and the susceptor 30 are insulated from each other. In an optional embodiment, the induction coil 40 is insulated through an insulating layer sprayed on the surface, painting, or the like; or the contact surface between the induction coil 40 and the susceptor 30 is insulated through adhesive, surface oxidization, spraying with an insulating layer, or the like.

During implementation, the susceptor 30 is made of an inductive metal or alloy material, forming a magnetic field shield for the induction coil 40. The susceptor 30 can substantially absorb and shield the magnetic field generated by the induction coil 40 inside completely, which is conducive to preventing the aerosol generation device from generating magnetic leakage outward. As another embodiment, the susceptor 30 includes a hollow elongated substrate and an inductive heating part bonded on the substrate. For example, the substrate includes a ceramic material, the inductive heating part is a metal or alloy material layer bonded on an outer surface or an inner wall surface of the ceramic substrate, or a metal or alloy material embedded in the ceramic substrate, and the induction coil is accommodated in a hollow interior of the ceramic substrate. As an optional embodiment, the ceramic substrate may provide insulation between the induction coil and the inductive heating part.

Further, flanges or bases (not shown in the figure) made of ceramic or PEEK may also be arranged at a position close to the exposure of the tail end of the susceptor 30, and then the aerosol generation device can mount and retain the susceptor 30 stably by fixing the flanges or bases by supporting, clamping, or retaining.

Further, referring to FIG. 4, a cross-section of the wire material of the induction coil 40 is circular. The induction coil 40 has 6 to 20 windings or turns. Moreover, the induction coil 40 has an extension length of about 8 mm to 12 mm. A solenoid constructed by the induction coil 40 has an outer diameter of about 2 mm.

Further, referring to FIG. 4, two ends of the induction coil 40 are respectively connected to a first conductive pin 41 and a second conductive pin 42, and are connected to the circuit 20 through the first conductive pin 41 and the second conductive pin 42 during use, so that the circuit 20 provides an alternating current for the induction coil 40. The first conductive pin 41 is welded to an upper end of the induction coil 40 and runs through an inner hollow of the induction coil 40 to a lower end, to be connected and assembled to the circuit 20. The second conductive pin 42 is directly connected to a lower end of the induction coil 40.

In another variant embodiment, the first conductive pin 41 may alternatively be located outside the induction coil 40, and extend in the axial direction of the induction coil 40 from the upper end to the lower end, to be connected to the circuit 20.

As an optional embodiment, the induction coil 40 and the susceptor 30 may be thermally conductive to each other, and the induction coil 40 is preferably prepared from a material with a proper positive or negative temperature coefficient of resistance, such as nickel-aluminum alloy, nickel-silicon alloy, palladium-containing alloy, and platinum-containing alloy. During use, a temperature of the susceptor 30 may be determined by detecting a resistance of the induction coil 40.

Alternatively, in another optional embodiment, a sensor configured to sense the temperature of the susceptor 30 may be mounted in a hollow cavity of the susceptor 30. For example, at least two couple wires made of different materials are welded on an inner wall of the retaining cavity 310 of the susceptor 30, and then a thermocouple configured to detect the temperature of the susceptor 30 may be formed between the couple wires. It may be understood that the sensor is not limited to the thermocouple.

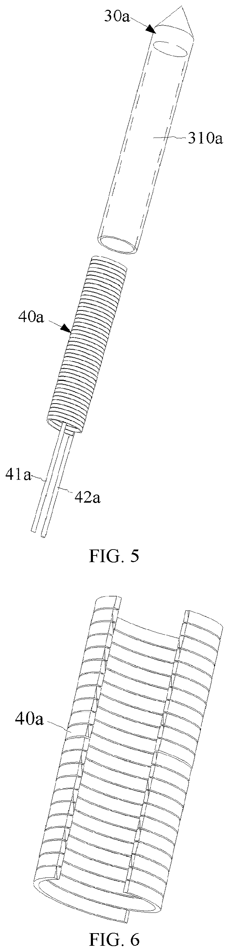

Further, referring to FIG. 5 and FIG. 6, a cross-sectional shape of a wire material of an induction coil 40a in a retaining cavity 310a of a susceptor 30a is a wide or flat shape different from a conventional circle. In the cross-sectional shape shown in FIG. 6, a cross section of the wire material of the induction coil 40a has a size extending in an axial direction that is greater than a size extending in a radial direction, so that the induction coil 40a is in a flat rectangular shape. Briefly, compared with a conventional helical heating coil formed by a wire with a circular cross section, the wire material of the above constructed induction coil 40a is in a completely flat form or at least in a flat form. Therefore, the wire material extends in the radial direction to a small degree. Through such measure, it is conducive to improving the current and enhancing the magnetic field intensity.

In the embodiment shown in FIG. 6, an extension length of the cross section of the wire material of the induction coil 40a in an axial direction of a solenoid approximately ranges from 1 mm to 4 mm. An extension length of the wire material of the induction coil 40a in a radial direction of the solenoid approximately ranges from 0.1 mm to 1 mm.

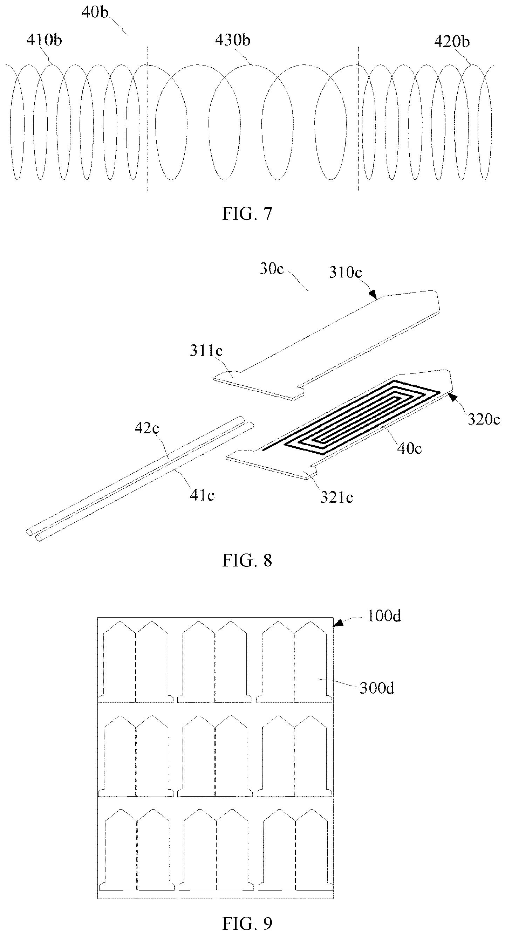

Further, FIG. 7 is a schematic view of an induction coil 40b according to another embodiment. The induction coil 40b includes a first portion 410b closest to a first end, a second portion 420b arranged closest to a second end, and a third portion 430b arranged between the first portion 410b and the second portion 420b. In addition, the number of windings or turns of each unit length in the third portion 430b in the coil is less than the number of windings or turns of each unit length in one or two of the first portion 410b and the second portion 420b.

During implementation, compared with a coil with the same number of turns or density of windings, the induction coil 40b in FIG. 7 can make a magnetic field of each part in the axial direction substantially uniform or similar.

Alternatively, in another optional embodiment, the induction coil 40b may be formed by other sections with at least two different densities of turns, or in a form of the density of turns gradually changing, so that distribution of the magnetic field during working of the induction coil 40b can be further adjusted or changed.

FIG. 8 is a schematic exploded view of a susceptor 30c having an induction coil 40c inside before assembly according to another embodiment. Specifically,
the susceptor 30c is sheet-shaped after preparation, and approximately has a length ranging from 12 mm to 19 mm, a width of 4.9 mm, and a thickness of 0.5 mm.

The susceptor 30c includes a first sheet portion 310c and a second sheet portion 320c that are prepared by etching or cutting before assembly and have the substantially same shape. After the first sheet portion 310c and the second sheet portion 320c are stacked, edge parts are connected into one piece through laser welding or the like, to form the susceptor 30c.

A planar induction coil 40c is formed on one of the first sheet portion 310c or the second sheet portion 320c through printing, deposition, attachment, or the like. In addition, the first conductive pin 41c and the second conductive pin 42c may alternatively be welded on two ends of the planar induction coil 40c, thereby facilitating providing the alternating current for the induction coil 40c.

As shown in FIG. 8, a tail end of the first sheet portion 310c of the susceptor 30c includes a first base portion 311c extending out in a width direction; and/or a tail end of the second sheet portion 320c includes a second base portion 321c extending out in the width direction. Therefore, the aerosol generation device can mount and retain the susceptor 30c stably by supporting, clamping, or retaining the first base portion 311c and/or the second base portion 321c.

Alternatively, in another variant embodiment, the planar induction coil 40c is a planar induction coil 40c with a small thickness prepared from a thin sheet substrate by etching, cutting, or the like; and then the first sheet portion 310c and the second sheet portion 320c separately clamp or wrap the induction coil 40c from two sides to form the susceptor 30c.

The planar induction coil 40c shown in FIG. 8 is substantially a rectangular or square spiral. In another variant embodiment, the planar induction coil 40c may be a conventional circular spiral. Alternatively, in more other variant embodiments, a plurality of planar induction coils 40c may be provided, which may overlap each other, or may be staggered, or may be separately distributed in different regions on the surface of the first sheet portion 310c. Alternatively, the plurality of planar induction coils 40c may be in series, or may be all independently connected to the circuit 20. Alternatively, at least one of the plurality of planar induction coils 40c generates a magnetic field intensity or frequency or inductance greater than that of another one.

An embodiment of this application further provides a susceptor 30d having a planar induction coil 40d inside and a method for large scale preparation of the same. Referring to FIG. 9 to FIG. 11, the method includes:
S10: Obtain a sheet sensing substrate 100d for preparing a susceptor 30d, and machining the sheet sensing substrate 100d to form several susceptor precursors 300d having a first sheet portion 310d and a second sheet portion 320d that are connected, as shown in FIG. 9.

During implementation, a material of the sheet sensing substrate 100d is the inductive metal material describe above, for example, NiFe alloy soft magnetic sheet with a thickness of 0.5 mm. A manner of machining to form the susceptor precursors 300d may include removing extra parts through chemical etching or laser cutting, to form the susceptor precursors 300d. Certainly, in a preferable embodiment shown in FIG. 9, based on convenience of batch preparation, the several susceptor precursors 300d obtained by machining are distributed in a matrix.

Further, as shown in FIG. 9, the susceptor precursor 300d includes a first sheet portion 310d and a second sheet portion 320d on the same plane. In addition, the first sheet portion 310d and the second sheet portion 320d are connected but not separated. Moreover, the first sheet portion 310d and the second sheet portion 320d are preferably symmetrical, and specifically, are bilaterally symmetrical along a central axis L in FIG. 9.

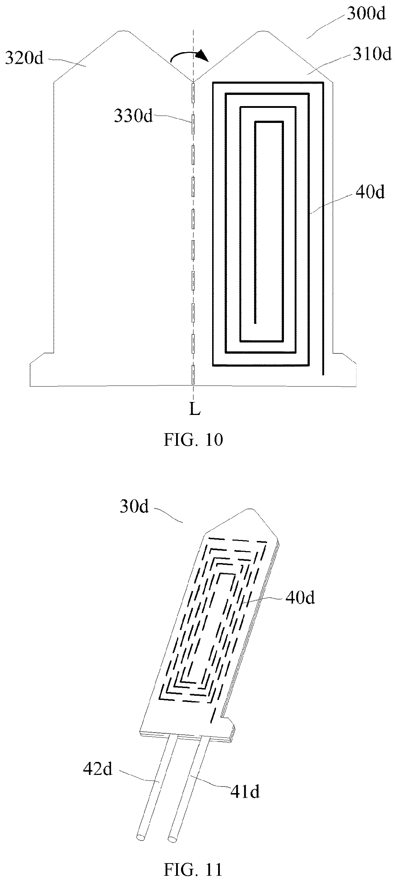

S20: Referring to FIG. 10, form a planar induction coil 40d on the first sheet portion 310d of the susceptor precursors 300d by printing, deposition, attachment, or the like. Further, a conductive pin may also be welded at two ends of the induction coil 40d.

S30: Fold the first sheet portion 310d and the second sheet portion 320d in half along the central axis L, and weld edge parts of the first sheet portion 310d and the second sheet portion 320d to connect them into one piece, to obtain the susceptor 30d having the induction coil 40d inside.

As shown in FIG. 10, for convenience of folding in half, the susceptor precursor 300d further includes a plurality of dents or grooves 35 provided around the central axis L, which is conducive to flipping or folding in half the first sheet portion 310d and the second sheet portion 320d.

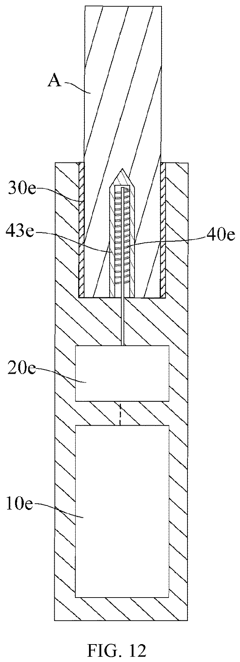

FIG. 12 is a schematic structural view of an aerosol generation device according to another embodiment. The aerosol generation device includes:
a susceptor 30e, constructed to surround and defined to be formed into a tubular or sleeve shape to receive the aerosol generation product A; and
a magnetic field generator, for example, an induction coil 40e, located in a hollow of a pin-shaped or needle-shaped housing 43e extending in an axial direction of a cavity. The induction coil 40e is configured to generate a changing magnetic field, so that the tubular or sleeve susceptor 30e produces heat, to heat the aerosol generation product A from a periphery.

The susceptor 30e encloses the induction coil 40e, and substantially shields or limits the magnetic field generated by the induction coil 40e inside the susceptor 30e. In the foregoing embodiments, the pin-shaped or needle-shaped housing 43e is prepared from a non-magnetically conductive material such as glass and ceramic.

### Implementation 2

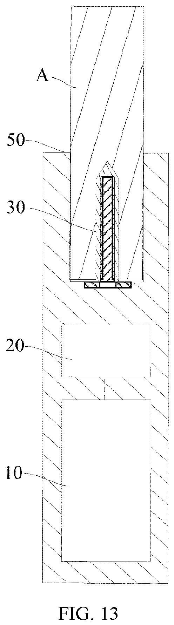

Another embodiment of this application provides an aerosol generation device. The construction of the device, referring to FIG. 13 to FIG. 15, may include:
a receiving cavity, provided with an opening 50, where an aerosol generation product A, for example, a cigarette, is removably received in the receiving cavity through the opening 50;
a susceptor 30, at least partially extending in the receiving cavity, and penetrated by a changing magnetic field to produce heat, to heat the aerosol generation product A, for example, a cigarette, so that at least one component of the aerosol generation product A evaporates and forms an aerosol for inhalation;
a magnetic field generator, for example, an induction coil 40, configured to generate the changing magnetic field under an alternating current;
a battery cell 10, being a rechargeable direct current cell, and capable of outputting a direct current; and
a circuit 20, connected to the rechargeable battery cell 10 through proper electricity, and configured to convert the direct current output by the battery cell 10 into an alternating current with a proper frequency and supply the alternating current to the induction coil 40, so that the induction coil 40 generates the changing magnetic field.

In a more preferable embodiment, the frequency of the alternating current supplied by the circuit 20 to the induction coil ranges from 80 KHz to 400 KHz; and more specifically, the frequency may approximately range from 200 KHz to 300 KHz.

In a preferable embodiment, a direct-current voltage provided by the battery cell 10 ranges from about 2.5 V to about 9.0 V, and the direct current provided by the battery cell 10 ranges from about 2.5 A to about 20 A.

In a preferable embodiment, the susceptor 30 is substantially in a shape of a pin or a needle, which is conducive to inserting the susceptor 30 into the aerosol generation product A. In addition, the susceptor 30 may have a length approximately ranging from 12 mm to 19 mm and a diameter ranging from 2.0 mm to 2.6 mm. The susceptor 30 may be made of stainless steel of level 430 (SS430), or may be made of stainless steel of level 420 (SS420) and an alloy material containing iron and nickel (such as permalloy).

Further, in an optional embodiment, the aerosol generation product A is preferably made of a tobacco-containing material that releases volatile compounds from the substrate when being heated, or may be a non-tobacco material that is suitable for being electrically heated for atomization. The aerosol generation product A is preferably a solid substrate, and may include one or more of powders, granules, shreds, strips, or flakes of one or more of vanilla leaves, tobacco leaves, homogenized tobacco, and expanded tobacco; or the solid substrate may include additional tobacco or non-tobacco volatile aroma compounds to be released when the substrate is heated.

Further, referring to FIG. 13 to FIG. 15, the susceptor 30 has a retaining cavity 310 inside and is in a shape of a pin or a needle. In addition, a front end 311 of the susceptor 30 close to the opening 50 is a free end, and is usually constructed into a conical tip for easy inserting the susceptor 30 into the aerosol generation product A, and a tail end 312 is constructed by an exposure formed by the retaining cavity 310 for easily assembling the induction coil 40 inside the susceptor 30. In a preferable embodiment, a wall thickness of the susceptor 30 having the retaining cavity 310 approximately ranges from 0.15 mm to 0.3 mm, and can be far greater than a skin depth of an eddy current formed by the susceptor 30 in the magnetic field, which is conducive to reducing magnetic leakage and limiting the magnetic field in the susceptor 30.

As another embodiment, the susceptor 30 includes an elongated substrate having the retaining cavity 310 and an inductive coating bonded to the substrate. For example, the substrate includes a ceramic material and a quartz lamp. The inductive coating is an inductive metal or alloy material layer (for example, a coating) bonded to an outer surface or an inner wall surface of the ceramic substrate or the quartz substrate. The induction coil 40 is accommodated in the retaining cavity 310 defined by the substrate. As an optional embodiment, the ceramic substrate may provide insulation between the induction coil 40 and the inductive coating.

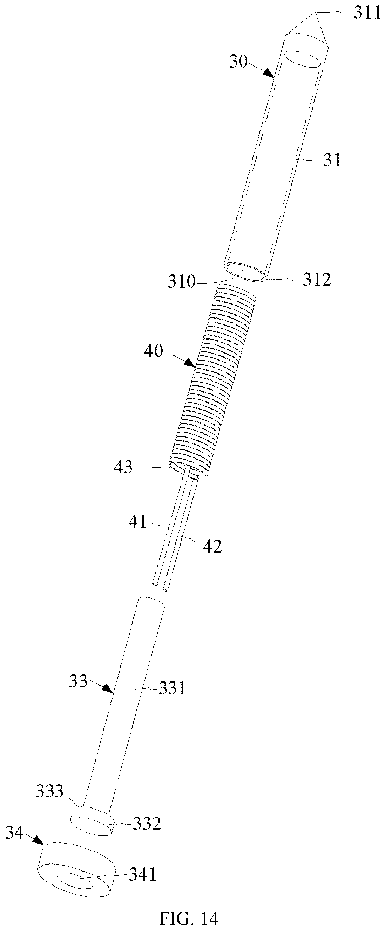

Further, referring to FIG. 13 to FIG. 15, the induction coil 40 is configured to generate the magnetic field under an alternating current; and specifically, is a helical shape extending in an axial direction of the susceptor 30 in structure. In the embodiment shown in FIG. 14, the induction coil 40 is completely assembled and retained in the retaining cavity 310 of the susceptor 30, and after assembly, the induction coil 40 and the susceptor 30 are thermally conductive to each other. Certainly, the induction coil 40 and the susceptor 30 are insulated from each other. In an optional embodiment, the induction coil 40 is insulated through an insulating layer sprayed on the surface, painting, or the like; or the contact surface between the induction coil 40 and the susceptor 30 is insulated through adhesive, surface oxidization, spraying with an insulating layer, or the like.

Further, referring to FIG. 14, the induction coil 40 has 6 to 20 windings or turns. Moreover, the induction coil 40 has an extension length of about 8 mm to 12 mm. A solenoid constructed by the induction coil 40 has an outer diameter of about 2 mm and an inner diameter of about 1.4 mm.

During implementation, an inner diameter of the retaining cavity 310 is substantially equal to the outer diameter of the induction coil 40, so that after assembly, the induction coil 40 is in contact with or abuts against an inner surface of the retaining cavity 310, and there is no gap or there is an extremely small gap. During implementation, the outer diameter of the induction coil 40 may be slightly less than the inner diameter of the retaining cavity 310 by less than 0.5 mm, which facilitates assembly and control to maintain the above gap. Further, after assembly, the susceptor 30 can substantially absorb the magnetic field generated by the induction coil 40. The magnetic field generated by the induction coil 40 is also substantially limited in the susceptor 30.

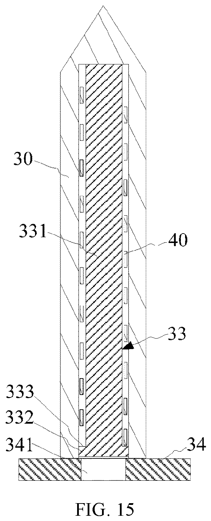

Further, referring to FIG. 15 and FIG. 6, a cross-sectional shape of a wire material of the induction coil 40 in the retaining cavity 310 encapsulated in the susceptor 30 is a wide or flat shape different from a conventional circle. In the cross-sectional shape shown in FIG. 6, a cross section of the wire material of the induction coil 40 has a size extending in an axial direction that is greater than a size extending in a radial direction, so that the induction coil 40 is in a flat rectangular shape. Briefly, compared with a conventional helical heating coil formed by a wire with a circular cross section, the wire material of the above constructed induction coil 40 is in a completely flat form or at least in a flat form. Therefore, the wire material extends in the radial direction to a small degree. Through such measure, it is conducive to improving the current and enhancing the magnetic field intensity.

In the embodiment shown in FIG. 6, an extension length of the cross section of the wire material of the induction coil 40 in an axial direction of a helical coil approximately ranges from 1 mm to 4 mm. An extension length of the wire material of the induction coil 40 in a radial direction of the helical coil approximately ranges from 0.1 mm to 1 mm.

Alternatively, in another variant embodiment shown in FIG. 4, the cross section of the wire material of the induction coil 40 is circular.

Further, referring to FIG. 14, the induction coil 40 further includes:
a first conductive pin 41 and a second conductive pin 42, and is connected to the circuit 20 through the first conductive pin 41 and the second conductive pin 42 during use, to provide an alternating current for the induction coil 40. The first conductive pin 41 is welded to an upper end of the induction coil 40 and runs through an inner hollow 43 of the induction coil 40 to a lower end, to be connected and assembled to the circuit 20. The second conductive pin 42 is directly connected to a lower end of the induction coil 40.

In another variant embodiment, the first conductive pin 41 may alternatively be located outside the induction coil 40, and extend in the axial direction of the induction coil 40 from the upper end to the lower end, to be connected to the circuit 20.

As an optional embodiment, the induction coil 40 and the susceptor 30 may be thermally conductive to each other, and the induction coil 40 is preferably prepared from a material with a proper positive or negative temperature coefficient of resistance, such as nickel-aluminum alloy, nickel-silicon alloy, palladium-containing alloy, and platinum-containing alloy. During use, a temperature of the susceptor 30 may be determined by detecting a resistance of the induction coil 40.

Alternatively, in another variant embodiment, the first conductive pin 41 and the second conductive pin 42 are respectively made of different couple wire materials, and then a thermocouple configured to detect a temperature of the induction coil 40 or the susceptor 30 may be formed between the first conductive pin 41 and the second conductive pin 42. For example, the first conductive pin 41 and the second conductive pin 42 are respectively prepared from two different materials in couple materials such as nickel, nickel-chromium alloy, nickel-silicon alloy, nickel-chromium-copper, constantan alloy, and iron-chromium alloy.

Alternatively, in another optional embodiment, a sensor configured to sense the temperature of the susceptor 30, for example, a common PTC temperature sensor, may be mounted in the retaining cavity 310 of the susceptor 30. Alternatively, for example, at least two couple wires made of different materials are welded on an inner wall of the retaining cavity 310 of the susceptor 30, and then the thermocouple configured to detect the temperature of the susceptor 30 may be formed between the couple wires. It may be understood that the sensor is not limited to the thermocouple.

Further, referring to the preferable embodiment shown in FIG. 14 and FIG. 15, the susceptor 30 further includes:
a magnetic core 33, substantially in an elongated rod or column shape, located in the induction coil 40, and configured to prevent the magnetic field in the induction coil 40 from generating magnetic leakage outside the susceptor 30.

The magnetic core 33 is made of a metal or an alloy of at least one of iron, cobalt, and nickel, for example, a good soft magnetic material or a semi-hard magnetic material, such as permalloy, stainless steel, or FeAl alloy. In a preferable embodiment, the magnetic core 33 is preferably made of a material with high heat capacity and high thermal conductivity. For example, in a case of the same appearance such as same size and volume, the magnetic core 33 is preferably, for example, FeAl alloy, and the content (mass percentage) of Al in the FeAl alloy may further be increased from conventional 6% to 8% to 20%, preferably 10% to 12%. Because the thermal conductivity and the specific heat capacity of Al are both higher than those of Fe, Al can provide higher heat conversion efficiency.

In addition, in a more preferable embodiment, the magnetic core 33 needs to fill the inside of the coil as much as possible. According to FIG. 15, the magnetic core 33 runs through from the lower end of the induction coil 40 to the upper end of the induction coil 40. During implementation, an extension length of the magnetic core 33 in the axial direction of the induction coil 40 is greater than or equal to an extension length of the induction coil 40 in the axial direction. Further, in the preferable embodiment shown in FIG. 15, the magnetic core 33 at least partially protrudes relative to the induction coil 40 after running through the induction coil 40.

Further, referring to the preferable embodiment shown in FIG. 14 and FIG. 15, the construction of the magnetic core 33 includes:
an elongated rod-like magnetic core body 331, where the magnetic core body 331 runs through from the lower end of the induction coil 40 to the upper end during assembly; and
a magnetic core base 332, where the magnetic core base 332 has an outer diameter or a cross-sectional area greater than that of the magnetic core body 331 and/or the hollow 43 of the induction coil 40, so that a step 333 is formed at a joint between the magnetic core base 332 and the magnetic core body 331; and during assembly, the lower end of the induction coil 40 abuts against the step 333, and then the magnetic core base 332 provides a stop.

In a preferable embodiment, the elongated magnetic core body 331 has an extension length approximately ranging from 10 mm to 15 mm; and the elongated magnetic core body 331 approximately has an outer diameter less than 1.5 mm.

As shown in the figure, the magnetic core base 332 and the inner wall of the retaining cavity 310 of the susceptor 30 are in contact to be thermally conductive to each other. Therefore, it is conducive to preventing a sudden drop of the temperature of the susceptor 30 due to an airflow flowing through the surface of the susceptor 30 during inhalation by using the magnetic core 33 to at least partially provide buffer against the temperature change of the susceptor 30, which maintains the temperature of the susceptor 30 in a proper range, so that the generation amount or smoking taste of the aerosol is uniform during the inhalation finally.

Further, in the preferable embodiment shown in FIG. 14 or FIG. 15, the device further includes:
a base or flange 34. In the figure, the base or flange 34 is made of a heat-resistant material such as PEEK and ceramic, such as ZrO₂ and Al₂O₃ ceramic. In preparation, the base or flange 34 is fixed at the lower end of the susceptor 30 through high-temperature adhesive, molding such as injection molding, welding, or the like, and maintains fixed connection, so that the aerosol generation device can mount and retain the susceptor 30 stably by supporting, clamping, or retaining the base or flange 34.

Further, according to the preferable embodiment shown in FIG. 14 and FIG. 15, the base or flange 34 is in a ring shape, and has a central hole 341. When the base or flange 34 is assembled to the lower end of the susceptor 30, the first conductive pin 41 and the second conductive pin 42 run through from the central hole 341 of the base or flange 34, to be connected to the circuit 20.

In addition, according to the preferable embodiment shown in FIG. 15, an inner diameter of the central hole 341 of the base or flange 34 is less than the outer diameter of the magnetic core base 332 of the magnetic core 33, which is conducive to fixing and retaining the magnetic core 33 in the susceptor 30 by supporting the magnetic core 33.

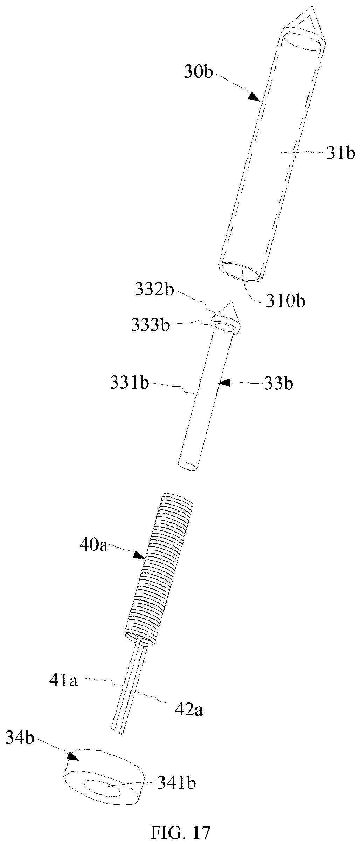

Further, FIG. 17 shows another preferable embodiment. The device includes:
a susceptor 30b in a shape of a pin or a needle, where a retaining cavity 310b in the susceptor 30b is configured to accommodate and encapsulate an induction coil 40a; and
a magnetic core 33b, including an elongated magnetic core body 331b and a magnetic core limiting end 332b. A step 333b is formed at a joint between the magnetic core limiting end 332b and the magnetic core body 331b.

During assembly, the magnetic core body 331b of the magnetic core 33b runs through from an upper end of the induction coil 40a to a lower end of the induction coil 40a. The magnetic core 33b abuts against the upper end of the induction coil 40a through the step 333b to form a stop. In addition, a first conductive pin 41a and a second conductive pin 42a of the induction coil 40a run through to the outside of the susceptor 30b through a central hole 341b of a base or flange 34b, to be connected to the circuit 20.

In this embodiment, the magnetic core limiting end 322b is substantially conical, and the conical magnetic core limiting end 322b and a conical top end of the retaining cavity 310b of the susceptor 30b cooperate for assembly and fixing, or are in contact to form mutual thermal conduction.

Certainly, in this embodiment, an extension length of the magnetic core body 331b of the magnetic core 33b in an axial direction of the induction coil 40a is greater than or equal to an extension length of the induction coil 40a in the axial direction.

In another embodiment of this application, the susceptor 30/30b, the induction coil 40/40a, and the magnetic core 33/33b are insulated from each other. In a preferable embodiment, the susceptor 30/30b, the induction coil 40/40a, and the magnetic core 33/33b are insulated from each other through high-temperature resistant insulating adhesive, for example, epoxy resin adhesive, filled therebetween. Specifically, during assembly, after the high-temperature resistant insulating adhesive is dip-coated or brush-coated on surfaces of the induction coil 40/40a and the magnetic core 33/33b, the induction coil 40/40a and the magnetic core 33/33b are assembled in the susceptor 30/30b, and then the high-temperature resistant insulating adhesive is cured by heating. In an optional embodiment, a hot air gun is directed at the retaining cavity 310/310b of the susceptor 30/30b to blow hot air, to heat and cure the high-temperature resistant insulating adhesive. Alternatively, in another optional embodiment, power is supplied to heat the induction coil 40/40a to cure the high-temperature resistant insulating adhesive. For example, the induction coil 40/40a is heated at low power for a period of time, and then the power is increased to about 4 W, until the high-temperature resistant insulating adhesive inside the susceptor 30/30b is completely cured.

Alternatively, in another optional embodiment, the susceptor 30/30b, the induction coil 40/40a, and the magnetic core 33/33b are insulated from each other through glaze powder filled therebetween, or insulated from each other through a gaze coating formed on the surfaces of the induction coil 40/40a and the magnetic core 33/33b.

Based on the above, the susceptor 30/30b and the magnetic core 33/33b respectively absorb a magnetic field or a magnetic force line generated by the induction coil 40/40a inside and outside the induction coil 40/40a, which is conducive to prevention or reduction of magnetic leakage.

In addition, the induction coil 40/40a having the magnetic core 33/33b inside is equivalent to an inductor having an iron core inside, which is conducive to increasing an inductance of the induction coil 40/40a after the induction coil 40/40a is coupled to the circuit 20.

### Implementation 3

An embodiment of this application provides an aerosol generation device. The construction of the device, referring to FIG. 13 to FIG. 15, may include:
a receiving cavity, provided with an opening 50, where an aerosol generation product A, for example, a cigarette, is removably received in the receiving cavity through the opening 50;
a heater 30, at least partially extending in the receiving cavity, and penetrated by a changing magnetic field to produce heat, to heat the aerosol generation product A, for example, a cigarette, so that at least one component of the aerosol generation product A evaporates and forms an aerosol for inhalation;
a magnetic field generator, for example, an induction coil 40, configured to generate the changing magnetic field under an alternating current;
a battery cell 10, being a rechargeable direct current cell, and capable of outputting a direct current; and
a circuit 20, connected to the rechargeable battery cell 10 through proper electricity, and configured to convert the direct current output by the battery cell 10 into an alternating current with a proper frequency and supply the alternating current to the induction coil 40, so that the induction coil 40 generates the changing magnetic field.

In a more preferable embodiment, the frequency of the alternating current supplied by the circuit 20 to the induction coil ranges from 80 KHz to 400 KHz; and more specifically, the frequency may approximately range from 200 KHz to 300 KHz.

In a preferable embodiment, a direct-current voltage provided by the battery cell 10 ranges from about 2.5 V to about 9.0 V, and the direct current provided by the battery cell 10 ranges from about 2.5 A to about 20 A.

In a preferable embodiment, the heater 30 is substantially in a shape of a pin or a needle, which is conducive to inserting the heater into the aerosol generation product A. In addition, the heater 30 may have a length approximately ranging from 12 mm to 19 mm and a diameter ranging from 2.0 mm to 4.0 mm. The heater 30 may be made of stainless steel of level 430 (SS430), or may be made of stainless steel of level 420 (SS420) and an alloy material containing iron and nickel (such as permalloy).

Further, in an optional embodiment, the aerosol generation product A is preferably made of a tobacco-containing material that releases volatile compounds from the substrate when being heated, or may be a non-tobacco material that is suitable for being electrically heated for atomization. The aerosol generation product A is preferably a solid substrate, and may include one or more of powders, granules, shreds, strips, or flakes of one or more of vanilla leaves, tobacco leaves, homogenized tobacco, and expanded tobacco; or the solid substrate may include additional tobacco or non-tobacco volatile aroma compounds to be released when the substrate is heated.

Further, referring to FIG. 13 to FIG. 15, the heater 30 is constructed in a shape of a pin or a needle. In this embodiment, the heater 30 includes:
a housing 31, defining an appearance construction of the heater 30. During implementation, the housing 31 is constructed into a shape of a pin or a needle and with a retaining cavity 310 inside. In addition, a front end 311 of the housing 31 close to the opening 50 is a free end, and is usually constructed into a conical tip for easily inserting the housing 31 into the aerosol generation product A, and a tail end 312 is constructed by an exposure formed by the retaining cavity 310 for easily assembling the induction coil 40 inside the housing 31. In a preferable embodiment, a wall thickness of the housing 31 with the retaining cavity 310 approximately ranges from 0.15 mm to 0.3 mm. In this embodiment, the housing 31 heats the aerosol generation product A by receiving and transferring heat of an inductor 33 inside.

In some embodiments, the housing 31 is prepared from a material such as a ceramic material with excellent high thermal conductivity characteristics or/and radiation characteristics (for example, alumina and zirconia), quartz, aluminum, or copper. For example, in some preferable embodiments, the housing 31 is made of an insulating material, for example, a non-metallic inorganic material, such as metal oxide (such as MgO, Al₂O₃, or B₂O₃) or metal nitride (such as Si₃N₄, B₃N₄, or Al₃N₄), or another composite ceramic material with high thermal conductivity.

Further, according to FIG. 14 and FIG. 15, the heater 30 further includes:
the induction coil 40, configured to generate a magnetic field under an alternating current. Specifically, in construction, the induction coil 40 is in a helical shape extending in an axial direction of the heater 30. In the embodiment shown in FIG. 3, the induction coil 40 is completely assembled and retained in the retaining cavity 310 of the housing 31, and after assembly, the induction coil 40 and the housing 31 are thermally conductive to each other. Certainly, the induction coil 40 and the housing 31 are insulated from each other. When the housing 31 includes a metal material, in an optional embodiment, the induction coil 40 is insulated through an insulating layer sprayed on the surface, painting, or the like; or the contact surface between the induction coil 40 and the housing 31 made of the metal material is insulated through adhesive, surface oxidization, spraying with an insulating layer, or the like.

Further, referring to FIG. 14, the induction coil 40 has 6 to 20 windings or turns. Moreover, the induction coil 40 has an extension length of about 8 mm to 12 mm. A solenoid constructed by the induction coil 40 has an outer diameter of about 2 mm and an inner diameter of about 1.4 mm.

During implementation, an inner diameter of the retaining cavity 310 is substantially equal to the outer diameter of the induction coil 40, so that after assembly, the induction coil 40 is in contact with or abuts against an inner surface of the retaining cavity 310, and there is no gap or there is an extremely small gap. During implementation, the outer diameter of the induction coil 40 may be slightly less than the inner diameter of the retaining cavity 310 by less than 0.5 mm, which facilitates assembly and control to maintain the above gap. In some other preferable embodiments, the housing 31 includes a metal material. Further, after assembly, the susceptor 30 can substantially limit the magnetic field generated by the induction coil 40 in the heater 30.

Further, referring to FIG. 15 and FIG. 6, a cross-sectional shape of a wire material of the induction coil 40 in the retaining cavity 310 encapsulated in the housing 31 is a wide or flat shape different from a conventional circle. In the cross-sectional shape shown in FIG. 6, a cross section of the wire material of the induction coil 40 has a size extending in an axial direction that is greater than a size extending in a radial direction, so that the induction coil 40 is in a flat rectangular shape. Briefly, compared with a conventional helical heating coil formed by a wire with a circular cross section, the wire material of the above constructed induction coil 40 is in a completely flat form or at least in a flat form. Therefore, the wire material extends in the radial direction to a small degree. Through such measure, it is conducive to improving the current and enhancing the magnetic field intensity.

In the embodiment shown in FIG. 6, an extension length of the cross section of the wire material of the induction coil 40 in an axial direction of a helical coil approximately ranges from 1 mm to 4 mm. An extension length of the wire material of the induction coil 40 in a radial direction of the helical coil approximately ranges from 0.1 mm to 1 mm.

Alternatively, in another variant embodiment shown in FIG. 4, the cross section of the wire material of the induction coil 40 is circular.

Further, referring to FIG. 14, the induction coil 40 further includes:
a first conductive pin 41 and a second conductive pin 42, and is connected to the circuit 20 through the first conductive pin 41 and the second conductive pin 42 during use, to provide an alternating current for the induction coil 40. The first conductive pin 41 is welded to an upper end of the induction coil 40 and runs through an inner hollow 43 of the induction coil 40 to a lower end, to be connected and assembled to the circuit 20. The second conductive pin 42 is directly connected to a lower end of the induction coil 40.

In another variant embodiment, the first conductive pin 41 may alternatively be located outside the induction coil 40, and extend in the axial direction of the induction coil 40 from the upper end to the lower end, to be connected to the circuit 20.

Further, referring to the preferable embodiment shown in FIG. 14 and FIG. 15, the heater 30 further includes:
the inductor 33, mainly as a heating part of the heater 30, where the inductor 33 is substantially in an elongated rod or column shape, and located in the induction coil 40, and can be penetrated by the changing magnetic field to produce heat.

In some preferable embodiments, the inductor 33 is made of an inductive metal or alloy of at least one of iron, cobalt, and nickel, for example, a good soft magnetic material or a semi-hard magnetic material, such as permalloy, stainless steel, or FeAl alloy.

In a preferable embodiment, an outer diameter of the inductor 33 is substantially the same as or close to an inner diameter of the induction coil 40, and then substantially fills the inner space of the induction coil 40, which is conducive to preventing the magnetic field in the induction coil 40 from generating magnetic leakage outward.

In addition, in a more preferable embodiment, the inductor 33 needs to fill the inside of the coil as much as possible. According to FIG. 15, the inductor 33 runs through from the lower end of the induction coil 40 to the upper end of the induction coil 40. During implementation, an extension length of the inductor 33 in the axial direction of the induction coil 40 is greater than or equal to an extension length of the induction coil 40 in the axial direction. Further, in the preferable embodiment shown in FIG. 15, the inductor 33 at least partially protrudes relative to the induction coil 40 after running through the induction coil 40.

Further, referring to the preferable embodiment shown in FIG. 14 and FIG. 15, the construction of the inductor 33 includes:
an elongated rod-like inductor substrate 331, where the inductor substrate 331 runs through from the lower end of the induction coil 40 to the upper end during assembly; and
an inductor base 332, where the inductor base 332 has an outer diameter or a cross-sectional area greater than that of the inductor substrate 331 and/or the hollow 43 of the induction coil 40, so that a step 333 is formed at a joint between the inductor base 332 and the inductor substrate 331; and during assembly, the lower end of the induction coil 40 abuts against the step 333, and then the inductor base 332 provides a stop.

In a preferable embodiment, the elongated inductor substrate 331 has an extension length approximately ranging from 10 mm to 15 mm; and the elongated inductor substrate 331 approximately has an outer diameter less than 1.5 mm.

As shown in the figure, the inductor base 332 and an inner wall of the retaining cavity 310 of the housing 31 are in contact to be thermally conductive to each other. Therefore, heat of the inductor 33 during heating can be directly transferred to the housing 31 through contact with the housing 31.

In some other variant embodiments, the inductor 33 may indirectly transfer heat to the housing 31 through the induction coil 40. That is, the induction coil 40 is thermally conductive to both the housing 31 and the inductor 33.

In some preferable embodiments, the induction coil 40 is prepared from a material with high thermal conductivity and low resistivity, such as gold, silver, or copper, which can have both relatively low resistance and higher thermal conductivity efficiency.

In still some other variant embodiments, the induction coil 40 is preferably prepared from a material with a proper positive or negative temperature coefficient of resistance, such as nickel-aluminum alloy, nickel-silicon alloy, palladium-containing alloy, or platinum-containing alloy. During use, a temperature of the heater 30 may be determined by detecting a resistance of the induction coil 40.

Alternatively, in another variant embodiment, the first conductive pin 41 and the second conductive pin 42 are respectively made of different couple wire materials, and then a thermocouple configured to detect a temperature of the induction coil 40 or the heater 30 may be formed between the first conductive pin 41 and the second conductive pin 42. For example, the first conductive pin 41 and the second conductive pin 42 are respectively prepared from two different materials in couple materials such as nickel, nickel-chromium alloy, nickel-silicon alloy, nickel-chromium-copper, constantan alloy, and iron-chromium alloy.

Alternatively, in another optional embodiment, a sensor configured to sense the temperature of the heater 30, for example, a common PTC temperature sensor, may be mounted in the retaining cavity 310 of the housing 31. Alternatively, for example, at least two couple wires made of different materials are welded on the inner wall of the retaining cavity 310 of the housing 31, and then the thermocouple configured to detect the temperature of the heater 30 may be formed between the couple wires. It may be understood that the sensor is not limited to the thermocouple.

Further, in still some other preferable embodiments, an interface of gap between the induction coil 40 and the inductor 33 in the retaining cavity 310 of the housing 31 is preferably bonded or encapsulated by using a high thermally conductive material, and the interface may be made of a high thermally conductive material or an insulating material, such as aluminum, carbon series (graphite or diamond), and boron nitride, which is conducive to improving heat capacity of the heater 30.

Further, in the preferable embodiment shown in FIG. 14 or FIG. 15, the device further includes:
a base or flange 34. In the figure, the base or flange 34 is made of a heat-resistant material such as PEEK and ceramic, such as ZrO₂ and Al₂O₃ ceramic. In preparation, the base or flange 34 is fixed at the lower end of the housing 31 through high-temperature adhesive, molding such as injection molding, welding, or the like, and maintains fixed connection, so that the aerosol generation device can mount and retain the heater 30 stably by supporting, clamping, or retaining the base or flange 34.

Further, according to the preferable embodiment shown in FIG. 14 and FIG. 15, the base or flange 34 is in a ring shape, and has a central hole 341. When the base or flange 34 is assembled to the lower end of the heater 30, the first conductive pin 41 and the second conductive pin 42 run through from the central hole 341 of the base or flange 34, to be connected to the circuit 20.

In addition, according to the preferable embodiment shown in FIG. 15, an inner diameter of the central hole 341 of the base or flange 34 is less than the outer diameter of the inductor base 332 of the inductor 33, which is conducive to fixing and retaining the inductor 33 in the housing 31 by supporting the inductor 33.

Further, FIG. 17 shows another preferable embodiment. The device includes:
a housing 31b in a shape of a pin or a needle, where a retaining cavity 310b in the housing 31b is configured to accommodate and encapsulate an induction coil 40a; and
an inductor 33b, including an elongated inductor substrate 331b and an inductor base 332b. A step 333b is formed at a joint between the inductor base 332b and the inductor substrate 331b.

The induction coil 40a is configured to generate a changing magnetic field;
the inductor 33b is penetrated by the changing magnetic field to produce heat; and
the housing 31b heats the aerosol generation product A by receiving the heat of the inductor 33b.

During assembly, the inductor substrate 331b of the inductor 33b runs through from an upper end of the induction coil 40a to a lower end of the induction coil 40a. The inductor 33b abuts against the upper end of the induction coil 40a through the step 333b to form a stop. In addition, a first conductive pin 41a and a second conductive pin 42a of the induction coil 40a run through to the outside of the housing 31b through a central hole 341b of a base or flange 34b, to be connected to the circuit 20.

In this embodiment, the inductor base 322b of the inductor 33b is substantially conical, and the conical inductor base 322b and a conical top end of the retaining cavity 310b of the housing 31b cooperate for assembly and fixing, or are in contact to form mutual thermal conduction.

Certainly, in this embodiment, an extension length of the inductor substrate 331b of the inductor 33b in an axial direction of the induction coil 40a is greater than or equal to an extension length of the induction coil 40a in the axial direction.

In another embodiment of this application, the housing 31/31b, the induction coil 40/40a, and the inductor 33/33b are insulated from each other. In a preferable embodiment, the housing 31/31b, the induction coil 40/40a, and the inductor 33/33b are insulated from each other through high-temperature resistant insulating adhesive, for example, epoxy resin adhesive, filled therebetween. Specifically, during assembly, after the high-temperature resistant insulating adhesive is dip-coated or brush-coated on surfaces of the induction coil 40/40a and the inductor 33/33b, the induction coil 40/40a and the inductor 33/33b are assembled in the housing 31/31b, and then the high-temperature resistant insulating adhesive is cured by heating. In an optional embodiment, a hot air gun is directed at the retaining cavity 310/310b of the housing 31/31b to blow hot air, to heat and cure the high-temperature resistant insulating adhesive. Alternatively, in another preferable embodiment, power is supplied to heat the induction coil 40/40a to cure the high-temperature resistant insulating adhesive. For example, the induction coil 40/40a is heated at low power for a period of time, and then the power is increased to about 4 W, until the high-temperature resistant insulating adhesive inside the housing 31/31b is completely cured.

Alternatively, in another optional embodiment, the housing 31/31b, the induction coil 40/40a, and the inductor 33/33b are insulated from each other through glaze powder filled therebetween, or insulated from each other through a gaze coating formed on the surfaces of the induction coil 40/40a and the inductor 33/33b.

Based on the above, the housing 31/31b and the inductor 33/33b respectively absorb a magnetic field or a magnetic force line generated by the induction coil 40/40a inside and outside the induction coil 40/40a, which is conducive to prevention or reduction of magnetic leakage.

In addition, the induction coil 40/40a having the inductor 33/33b inside is equivalent to an inductor having an iron core inside, which is conducive to increasing an inductance of the induction coil 40/40a after the induction coil 40/40a is coupled to the circuit 20.

### Implementation 4

An embodiment of this application provides an aerosol generation device. The construction of the device, referring to FIG. 13 to FIG. 15, may include:
a receiving cavity, provided with an opening 50, where an aerosol generation product A, for example, a cigarette, is removably received in the receiving cavity through the opening 50;
a heater 30, at least partially extending in the receiving cavity, and penetrated by a changing magnetic field to produce heat, to heat the aerosol generation product A, for example, a cigarette, so that at least one component of the aerosol generation product A evaporates and forms an aerosol for inhalation;
a magnetic field generator, for example, an induction coil 40, configured to generate the changing magnetic field under an alternating current;
a battery cell 10, being a rechargeable direct current cell, and capable of outputting a direct current; and
a circuit 20, connected to the rechargeable battery cell 10 through proper electricity, and configured to convert the direct current output by the battery cell 10 into an alternating current with a proper frequency and supply the alternating current to the induction coil 40, so that the induction coil 40 generates the changing magnetic field.

In a more preferable embodiment, the frequency of the alternating current supplied by the circuit 20 to the induction coil ranges from 80 KHz to 400 KHz; and more specifically, the frequency may approximately range from 200 KHz to 300 KHz.

In a preferable embodiment, a direct-current voltage provided by the battery cell 10 ranges from about 2.5 V to about 9.0 V, and the direct current provided by the battery cell 10 ranges from about 2.5 A to about 20 A.

In a preferable embodiment, the heater 30 is substantially in a shape of a pin or a needle, which is conducive to inserting the heater into the aerosol generation product A. In addition, the heater 30 may have a length approximately ranging from 12 mm to 19 mm and a diameter ranging from 2.0 mm to 4.0 mm. The heater 30 may be made of stainless steel of level 430 (SS430), or may be made of stainless steel of level 420 (SS420) and an alloy material containing iron and nickel (such as permalloy).

Further, in an optional embodiment, the aerosol generation product A is preferably made of a tobacco-containing material that releases volatile compounds from the substrate when being heated, or may be a non-tobacco material that is suitable for being electrically heated for atomization. The aerosol generation product A is preferably a solid substrate, and may include one or more of powders, granules, shreds, strips, or flakes of one or more of vanilla leaves, tobacco leaves, homogenized tobacco, and expanded tobacco; or the solid substrate may include additional tobacco or non-tobacco volatile aroma compounds to be released when the substrate is heated.

Further, referring to FIG. 13 to FIG. 15, the heater 30 is constructed in a shape of a pin or a needle. In this embodiment, the heater 30 includes:
a first inductor 31, defining an appearance construction of the heater 30, and capable of being penetrated by the changing magnetic field. During implementation, the first inductor 31 is constructed into a shape of a pin or a needle and with a retaining cavity 310 inside. In addition, a front end 311 of the first inductor 31 close to the opening 50 is a free end, and is usually constructed into a conical tip for easily inserting the first inductor 31 into the aerosol generation product A, and a tail end 312 is constructed by an exposure formed by the retaining cavity 310 for easily assembling the induction coil 40 inside the first inductor 31. In a preferable embodiment, a wall thickness of the housing 31 with the retaining cavity 310 approximately ranges from 0.15 mm to 0.3 mm.

Further, according to FIG. 14 and FIG. 15, the heater 30 further includes:
the induction coil 40, configured to generate a magnetic field under an alternating current. Specifically, in construction, the induction coil 40 is in a helical shape extending in an axial direction of the heater 30. In the embodiment shown in FIG. 14, the induction coil 40 is completely assembled and retained in the retaining cavity 310 of the first inductor 31, and after assembly, the induction coil 40 and the first inductor 31 are thermally conductive to each other. Certainly, the induction coil 40 and the first inductor 31 are insulated from each other. When the first inductor 31 includes a metal material, in an optional embodiment, the induction coil 40 is insulated through an insulating layer sprayed on the surface, painting, or the like; or the contact surface between the induction coil 40 and the first inductor 31 made of the metal material is insulated through adhesive, surface oxidization, spraying with an insulating layer, or the like.

Further, referring to the preferable embodiment shown in FIG. 14 and FIG. 15, the heater 30 further includes:
a second inductor 33, substantially in an elongated rod or column shape, located in the induction coil 40, and capable of being penetrated by the changing magnetic field to produce heat.

In this embodiment, the first inductor 31 and the second inductor 33 can heat the inside and outside of the induction coil 40; and then during use, the heat of the heater 30 can be maintained in ahollow inside the induction coil 40 by the second inductor 33. This is conducive to maintaining heat capacity of the heater 30, which is conducive to preventing a temperature of the heater 30 from jumping when an airflow flows across the surface of the heater 30 during inhalation.

In this embodiment, the first inductor 31 and the second inductor 33 are prepared from an inductive material, for example, a good soft magnetic material or a semi-hard magnetic material, such as permalloy, stainless steel, or FeAl alloy.

In this embodiment, the first inductor 31 directly heats the aerosol generation product A through its own induction heating, and can also receive the heat transferred by the second inductor 33 to heat the aerosol generation product A.

Similarly, in some embodiments, an outer diameter of the second inductor 33 is substantially the same as or close to an inner diameter of the induction coil 40, and then substantially fills the inner space of the induction coil 40, which is conducive to preventing the magnetic field in the induction coil 40 from generating magnetic leakage outward.

In addition, in a more preferable embodiment, the second inductor 33 needs to fill the inside of the coil as much as possible. According to FIG. 15, the second inductor 33 runs through from a lower end of the induction coil 40 to an upper end of the induction coil 40. During implementation, an extension length of the second inductor 33 in an axial direction of the induction coil 40 is greater than or equal to an extension length of the induction coil 40 in the axial direction. Further, in the preferable embodiment shown in FIG. 15, the second inductor 33 at least partially protrudes relative to the induction coil 40 after running through the induction coil 40.

Further, referring to the preferable embodiment shown in FIG. 14 and FIG. 15, the construction of the second inductor 33 includes:
an elongated rod-like second inductor substrate 331, where the second inductor substrate 331 runs through from the lower end of the induction coil 40 to the upper end during assembly; and
a second inductor base 332, where the second inductor base 332 has an outer diameter or a cross-sectional area greater than that of the second inductor substrate 331 and/or the hollow 323 of the induction coil 40, so that a step 333 is formed at a joint between the second inductor base 332 and the second inductor substrate 331; and during assembly, the lower end of the induction coil 40 abuts against the step 333, and then the second inductor base 332 provides a stop.

In a preferable embodiment, the elongated second inductor substrate 331 has an extension length approximately ranging from 10 mm to 15 mm; and the elongated second inductor substrate 331 approximately has an outer diameter less than 1.5 mm.

As shown in the figure, the second inductor base 332 and an inner wall of the retaining cavity 310 of the first inductor 31 are in contact to be thermally conductive to each other. Therefore, heat of the second inductor 33 during heating can be directly transferred to the first inductor 31 through contact with the first inductor 31.

In some other variant embodiments, the second inductor 33 may indirectly transfer heat to the first inductor 31 through the induction coil 40. That is, the induction coil 40 is thermally conductive to both the first inductor 31 and the second inductor 33.

In still some other variant embodiments, the induction coil 40 is preferably prepared from a material with a proper positive or negative temperature coefficient of resistance, such as nickel-aluminum alloy, nickel-silicon alloy, palladium-containing alloy, or platinum-containing alloy. During use, a temperature of the heater 30 may be determined by detecting a resistance of the induction coil 40.

Alternatively, in another variant embodiment, the first conductive pin 41 and the second conductive pin 42 are respectively made of different couple wire materials, and then a thermocouple configured to detect a temperature of the induction coil 40 or the heater 30 may be formed between the first conductive pin 41 and the second conductive pin 42. For example, the first conductive pin 41 and the second conductive pin 42 are respectively prepared from two different materials in couple materials such as nickel, nickel-chromium alloy, nickel-silicon alloy, nickel-chromium-copper, constantan alloy, and iron-chromium alloy.

Alternatively, in another optional embodiment, a sensor configured to sense the temperature of the heater 30, for example, a common PTC temperature sensor, may be mounted in the retaining cavity 310 of the first inductor 31. Alternatively, for example, at least two couple wires made of different materials are welded on the inner wall of the retaining cavity 310 of the first inductor 31, and then the thermocouple configured to detect the temperature of the heater 30 may be formed between the couple wires. It may be understood that the sensor is not limited to the thermocouple.

Further, in the preferable embodiment shown in FIG. 14 or FIG. 15, the device further includes:
a base or flange 34. In the figure, the base or flange 34 is made of a heat-resistant material such as PEEK and ceramic, such as ZrO₂ and Al₂O₃ ceramic. In preparation, the base or flange 34 is fixed at the lower end of the first inductor 31 through high-temperature adhesive, molding such as injection molding, welding, or the like, and maintains fixed connection, so that the aerosol generation device can mount and retain the heater 30 stably by supporting, clamping, or retaining the base or flange 34.

Further, according to the preferable embodiment shown in FIG. 14 and FIG. 15, the base or flange 34 is in a ring shape, and has a central hole 341. When the base or flange 34 is assembled to the lower end of the heater 30, the first conductive pin 41 and the second conductive pin 42 run through from the central hole 341 of the base or flange 34, to be connected to the circuit 20.

In addition, according to the preferable embodiment shown in FIG. 15, an inner diameter of the central hole 341 of the base or flange 34 is less than the outer diameter of the second inductor base 332 of the second inductor 33, which is conducive to fixing and retaining the second inductor 33 in the housing 31 by supporting the second inductor 33.

Further, FIG. 17 shows another preferable embodiment. The device includes:
a first inductor 31b in a shape of a pin or a needle, where a retaining cavity 310b in the first inductor 31b is configured to accommodate and encapsulate an induction coil 40a; and
a second inductor 33b, including an elongated second inductor substrate 331b and a second inductor base 332b. A step 333b is formed at a joint between the second inductor base 332b and the second inductor substrate 331b.

The induction coil 40a is configured to generate a changing magnetic field; the first inductor 31b and the second inductor 33b are penetrated by the changing magnetic field to produce heat; and one part of the first inductor 31b can directly heat the aerosol generation product A through induction heating, and the other part can receive the heat of the second inductor 33b to heat the aerosol generation product A.

During assembly, the second inductor substrate 331b of the second inductor 33b runs through from an upper end of the induction coil 40a to a lower end of the induction coil 40a. The second inductor 33b abuts against the upper end of the induction coil 40a through the step 333b to form a stop. In addition, a first conductive pin 41a and a second conductive pin 42a of the induction coil 40a run through to the outside of the first inductor 31b through a central hole 341b of a base or flange 34b, to be connected to the circuit 20.

In this embodiment, the second inductor base 322b of the second inductor 33b is substantially conical, and the conical second inductor base 322b and a conical top end of the retaining cavity 310b of the first inductor 31b cooperate for assembly and fixing, or are in contact to form mutual thermal conduction.

Certainly, in this embodiment, an extension length of the second inductor substrate 331b of the second inductor 33b in an axial direction of the induction coil 40a is greater than or equal to an extension length of the induction coil 40a in the axial direction.

In another embodiment of this application, the first inductor 31/31b, the induction coil 40/40a, and the second inductor 33/33b are insulated from each other. In a preferable embodiment, the first inductor 31/31b, the induction coil 40/40a, and the second inductor 33/33b are insulated from each other through high-temperature resistant insulating adhesive, for example, epoxy resin adhesive, filled therebetween. Specifically, during assembly, after the high-temperature resistant insulating adhesive is dip-coated or brush-coated on surfaces of the induction coil 40/40a and the second inductor 33/33b, the induction coil 40/40a and the second inductor 33/33b are assembled in the first inductor 31/31b, and the high-temperature resistant insulating adhesive is cured by heating. In an optional embodiment, a hot air gun is directed at the retaining cavity 310/310b of the first inductor 31/31b to blow hot air, to heat and cure the high-temperature resistant insulating adhesive. Alternatively, in another preferable embodiment, power is supplied to heat the induction coil 40/40a to cure the high-temperature resistant insulating adhesive. For example, the induction coil 40/40a is heated at low power for a period of time, and then the power is increased to about 4 W, until the high-temperature resistant insulating adhesive inside the first inductor 31/31b is completely cured.

Generally, during implementation, the first inductor 31/31b may be prepared from a single inductive material. As another variant embodiment, the first inductor 31/31b includes an elongated substrate having the retaining cavity 310 and an inductive coating bonded to the substrate. For example, the substrate includes a ceramic material and a quartz lamp. The inductive coating is an inductive metal or alloy material layer (for example, a coating) bonded to an outer surface or an inner wall surface of the ceramic substrate or the quartz substrate. In this optional embodiment, the ceramic substrate may provide insulation between the first inductor 31/31b and the induction coil 40/40a.

The foregoing embodiments only describe several implementations of the present invention specifically and in detail, but cannot be construed as a limitation to the patent scope of the present invention. It should be noted that a person of ordinary skill in the art may make various changes and improvements without departing from the ideas of the present invention, which shall all fall within the protection scope of the present invention. Therefore, the protection scope of the patent of the present invention is subject to the protection scope of the appended claims.

## Claims

1. An aerosol generation device, configured to heat an aerosol generation product to generate an aerosol, and comprising:
a cavity, configured to receive the aerosol generation product;
a susceptor, at least partially extending in the cavity, and configured to be penetrated by a changing magnetic field to produce heat, to heat the aerosol generation product in the cavity; and
an induction coil, arranged in the susceptor, and configured to generate the changing magnetic field.

2. The aerosol generation device according to claim 1, wherein the induction coil and the susceptor are thermally conductive to each other; and the induction coil is made of a material with a positive or negative temperature coefficient of resistance, to determine a temperature of the susceptor during use by detecting a resistance of the induction coil.

3. The aerosol generation device according to claim 1 or 2, wherein the susceptor is constructed into a shape of a pin or a needle, and has a hollow extending in an axial direction; and
the induction coil is located in the hollow.

4. The aerosol generation device according to claim 1 or 2, wherein a cross section of a wire material of the induction coil is constructed into that a size extending in an axial direction is greater than a size extending in a radial direction.

5. The aerosol generation device according to claim 1 or 2, wherein the induction coil comprises a first portion and a second portion arranged in an axial direction, wherein
in the axial direction of the induction coil, the number of windings or turns of each unit length in the first portion is less than the number of windings or turns of each unit length in the second portion.

6. The aerosol generation device according to claim 1 or 2, wherein the susceptor is constructed into a sheet, and comprises a first surface and a second surface facing away from each other; and
the induction coil is constructed into a planar helical coil located between the first surface and the second surface.

7. The aerosol generation device according to claim 6, wherein the susceptor comprises a first sheet portion and a second sheet portion opposite to each other in a thickness direction; and
the induction coil is located between the first sheet portion and the second sheet portion.

8. The aerosol generation device according to claim 6, wherein the first sheet portion and the second sheet portion are formed by folding a sheet precursor in half around an axis.

9. The aerosol generation device according to claim 1 or 2, further comprising:
a magnetic core, at least partially located in the induction coil.

10. The aerosol generation device according to claim 9, wherein the magnetic core comprises at least any one of iron, cobalt, or nickel.

11. The aerosol generation device according to claim 9, wherein at least a part of the magnetic core is in contact with the susceptor.

12. The aerosol generation device according to claim 9, wherein the susceptor comprises:
a substrate at least partially extending in the receiving cavity, and an inductive coating formed on the substrate.

13. The aerosol generation device according to claim 9, wherein the induction coil comprises a first end and a second end opposite to each other in an axial direction; and the magnetic core runs through from the first end of the induction coil to the second end.

14. An aerosol generation device, configured to heat an aerosol generation product to generate an aerosol, comprising:
a receiving cavity, configured to receive the aerosol generation product; and
a heater, at least partially extending in the receiving cavity, to heat the aerosol generation product, wherein the heater comprises:
a housing, constructed into at least partially extending in an axial direction of the receiving cavity, and having a retaining cavity extending in the axial direction;
an induction coil, located in the retaining cavity of the housing, and configured to generate a changing magnetic field; and
an inductor, at least partially located in the induction coil, and configured to be penetrated by the changing magnetic field to produce heat, wherein
the housing is configured to heat the aerosol generation product by receiving the heat of the inductor.

15. A heater for an aerosol generation device, wherein the heater comprises:
a housing, having a retaining cavity extending in an axial direction;
an induction coil, located in the retaining cavity of the housing, and configured to generate a changing magnetic field; and
an inductor, at least partially located in the induction coil, and configured to be penetrated by the changing magnetic field to produce heat, wherein
the housing is configured to heat the aerosol generation product by receiving the heat of the inductor.
